# EUROPEAN PATENT APPLICATION

(11) **EP 1 890 033 A2**
(43) Date of publication of application: **20.02.2008**
(21) Application number: 07252862.3
(22) Date of filing: 19.07.2007
(51) Int. Cl.: F03D 3/04

(54) **A wind operable generator**

(30) Priority: 20.07.2006 GB 0614384
(71) Applicant: Andrews, Michel John, Burnbury Tarporley Cheshire CW6 9RA (GB)
(72) Inventor: Andrews, Michel John, Burnbury Tarporley Cheshire CW6 9RA (GB)
(74) Representative: Wilson Gunn

(57) **Abstract**

A wind operable generator comprises a series of turbines each including a turbine blade 2 mounted for rotation about a vertically mounted shaft 3. A series of dynamic and static deflectors 6 and 7 are associated with the turbines and in operation coact with the turbines and each other to direct incident wind onto the more efficient parts of the blades of the turbines. A series of these generators can be supplied for a complete installation. They may be installed on motorway central reservations. Apart from generating power, installations may also assist in reducing wind speed.

## Description

The present invention relates to a wind operable generator.

Wind operable generators are already well known. However, they are generally extremely large and very expensive to build and install. As a result of their size, they cannot readily be installed in many locations. It is an object of the invention to eliminate or mitigate these disadvantages.

According to the present invention, there is provided a wind operable generator comprising a turbine, deflector means for directing wind onto the turbine, and a dynamo drivably connected to the turbine and operative to generate electricity under the action of the turbine.

In a preferred embodiment of the invention, the deflector means may comprise one or more static deflectors and/or one or more dynamic deflectors. The or each deflector is preferably shaped to direct incident wind onto a desired part of the blade of a turbine. The or each dynamic deflector is preferably pivotally mounted allowing it to alter its position automatically in response to changes in wind direction. Alternatively, the or each dynamic deflector may be positively driven around its pivot. The or each turbine blade may comprise a convex portion and a concave portion disposed on opposite sides respectively of an upright, preferably vertical, shaft. The shaft may be mounted in a roller bearing at its upper end and in a ceramic bush at its lower end. The lower end of the shaft may have a replaceable tungsten carbide tip and a visual, electronic or other indicator may be provided to indicate when replacement is desirable. The dynamo may comprise a rotor fixed to the shaft and a stator surrounding the rotor. An installation may advantageously comprise a series of turbines with associated deflectors. Units comprising a series of turbines and associated deflectors may be constructed in modular form and connected together on site to produce a larger installation with power lines running alongside or underground to carry electricity generated. The deflectors and turbine blades are advantageously made from a synthetic plastics material such as polyethylene, polypropylene sheet or rigid polyurethane foam. Use of the latter would permit aero dynamic shapes to be moulded which would be strong rigid and light. Proposed installation locations are motorway central reservations, railways and tops of buildings.

In order that the invention may be more clearly understood, embodiments thereof will now be described, by way of example, with reference to the accompanying drawing, in which:-
- Figure 1: is a diagrammatic plan view of one form of the invention;
- Figure 2: is a diagrammatic plan view of a second form of the invention,
- Figure 3: is a diagrammatic side elevational view in section of a turbine forming part of the embodiments of Figure1 and Figure 2, and
- Figure 4: diagrammatically shows a modification of the arrangements shown in Figures 1 and 2.

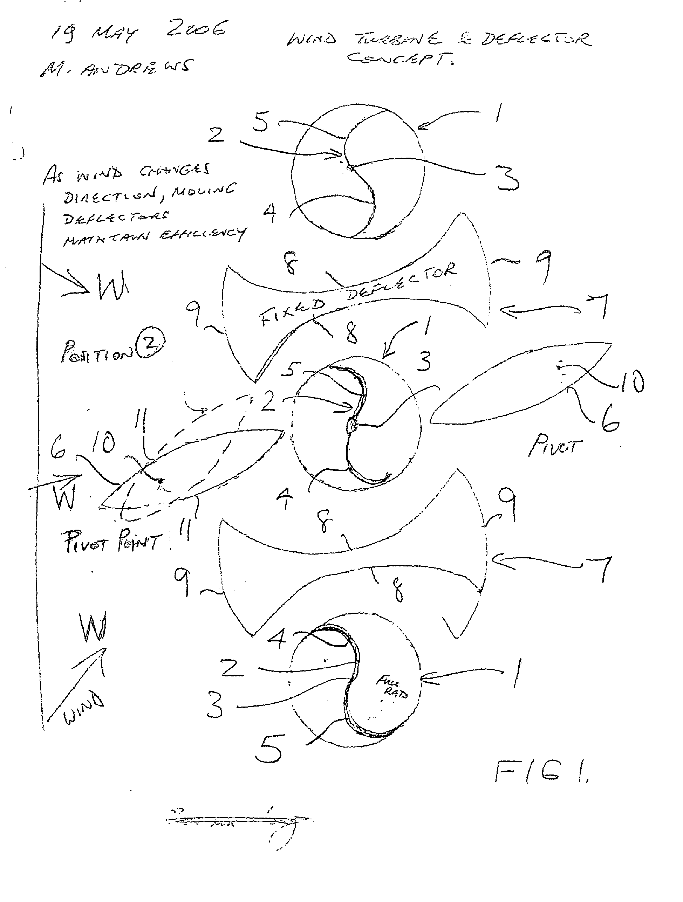

Referring to Figure 1, the wind operable generator comprises a series of turbines each of which includes a turbine blade 2 mounted for rotation about a vertically mounted shaft 3. Each turbine blade is substantially "S" shaped in cross-section presenting a concave face 4 to incident wind on one side of the shaft and a convex face 5 on the diametrically opposite side of the shaft 3.

A series of dynamic and static deflectors are associated with the turbines. The dynamic deflectors are referenced 6 and the static deflectors are referenced 7. The shape of the deflectors is chosen to secure the most efficient operation for the turbines under prevailing wind conditions. The deflectors coact with each other and with the turbine blades 3 to direct incident wind onto the more efficient concave faces 4 of the blades and away from the less efficient convex faces 5 of the blades. The static deflectors 7 are disposed respectively between adjacent ones of each pair of adjacent turbines. Each static deflector comprises two elongate concave faces 8 and two shorter end convex faces 9. The concave faces are disposed adjacent the blades of the two turbines between which the deflector is situated.

Each dynamic deflector 6 is pivotally mounted typically at 10 and comprises two convex longitudinal faces 11 meeting at opposite ends. The angle through which each deflector may pivot under the action of incident wind is limited by stops or guide channels (not shown). That angle may vary depending upon circumstances but is expected to lie in the range 15° to 45°. The combined effect of the dynamic and static reflectors is to direct incident wind onto the more efficient concave faces 4 of the corresponding turbine blades 3 and away from the less efficient convex faces 5. Dynamic blades are also mounted for pivotal movement on the other side of the turbines. These cater for situations in which the wind direction changes and impinges upon the turbines from the other side. In the United Kingdom prevailing winds are south westerly but that will on occasion change. The turbines and deflectors will be sited to give the most effective operation for a given location having regard to the prevailing wind direction but bearing in mind that that wind direction may change and may completely reverse. Wind directions are indicated by arrows W.

The deflectors and turbine blades may be made from a synthetic plastics material such as polyethylene polypropylene sheet or rigid polyurethane foam. The use of the latter would enable aerodynamic shapes to be moulded as desired and would produce a component which is strong, rigid and light.

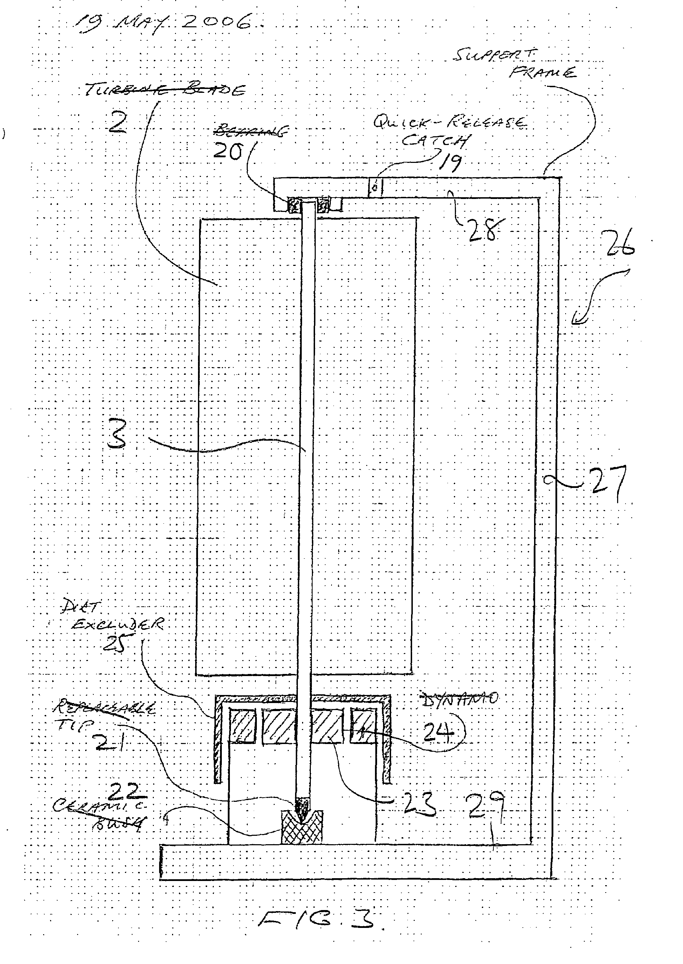

Referring to Figure 3, one example of a turbine for the installation is diagrammatically shown in more detail. As already described, the turbine comprises a blade 2 mounted for rotation about a vertical shaft 3. The shaft is mounted in a roller bearing 20 at its upper end and comprises a tungsten carbide tip 21 at its lower end running on a ceramic bush 22. The tip 21 is readily accessible for ease of replacement. A visual indicator (not shown), such as a warning light, can be provided to indicate wear and when replacement is required. A dynamo comprising a rotor 23 and stator 24 surrounding the rotor are also disposed towards the lower end of the shaft 3. The rotor 23 is mounted on the shaft 3 and rotates with it. A dirt excluder 25 surrounds the stator 24. The roller bearing 20 and the ceramic bush 22 are supported on a support frame 26. This frame comprises an upright member 27 and two lateral members 28 and 29. The upper lateral member 28 which supports the roller bearing incorporates a quick release catch 19, for ease of installation and maintenance.

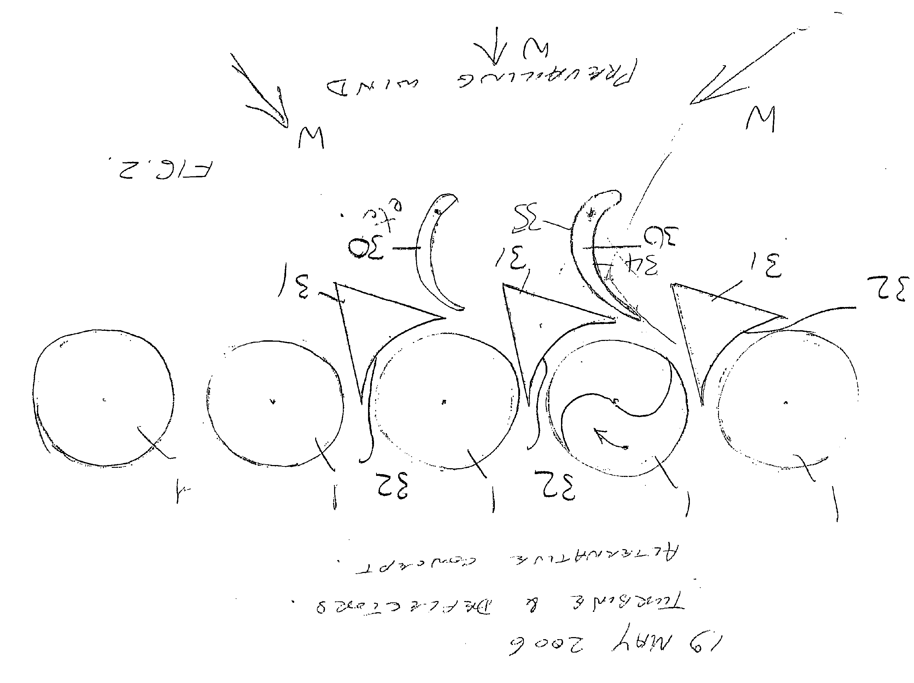

Figure 2 shows an alternative arrangement to that shown in Figure 1. As with the arrangement of Figure 1, this alternative arrangement comprises a series of turbines 1 and associated dynamic deflectors 30 and static deflectors 31. Each turbine 1 may be of the form already described with reference to Figure 3. The shape and position of the deflectors differ as compared with the arrangement shown in Figure 1. Thus the static deflectors 31 are substantially triangular in shape but have a concave face 32 adjacent the turbines. Also, the deflectors are not positioned directly between corresponding adjacent turbines although part of each relevant deflector does extend into the gap between corresponding turbines: The dynamic deflectors are pivotally mounted at 33 and are generally banana shaped having one concave face 34 and one convex face 35. As before, the dynamic deflectors automatically adjust their position under the action of the changing prevailing wind indicated again by arrows W. In other respects, the arrangement is similar to the first embodiment. In particular, the construction of each turbine may be as already described.

It is envisaged that a primary location for the above described installations is the central reservation of motorways and perhaps also the sides of motorways. Such a location would provide a degree of protection against tampering or vandalism. The installations will also help in reducing wind speed across motorways. It is expected that the installations could be supplied in modular units comprising, for example, five or six turbines each linked together electrically. Power lines can run along the motorways and spur off to the National Grid as appropriate or convenient. As the turbines will drive dynamos directly no gearboxes will be required. Furthermore, the units will operate at very low wind speeds. The provision of the static and dynamic deflectors will shield the rotating turbine blades which could otherwise be a distraction to drivers. The units will also provide means for displaying information to passing motorists whether relating to traffic and weather conditions, marketing, advertising or otherwise. For added strength and safety, units could be disposed in a mesh although that would tend to reduce efficiency. The size of the units could be varied as required depending upon the particular location. The proposed motorway reservation location would normally permit units of up to 4m in height and 2m in diameter. Other potential locations for the units are railways and tops of buildings.

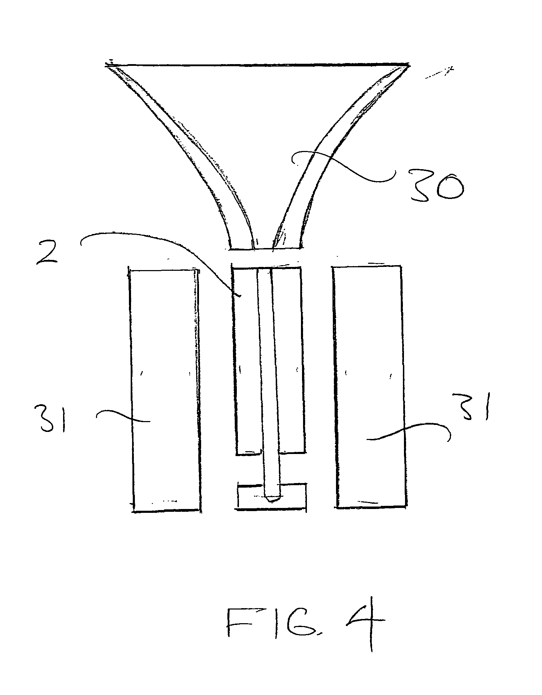

Deflectors may be placed in positions other than that described above. For example, deflectors may be placed above the turbine in addition to (or instead of) the laterally positioned deflectors. Such an arrangement is shown in Figure 4, the upper deflector being referenced 30, lateral deflectors 31, and turbine blade 2 (as previously). The deflectors increase performance of the turbine in an easy, efficient, cost effective manner. Instead of more expensive blades, dynamos etc., the simple addition of deflectors increases output.

It will be appreciated that the above embodiments have been described by way of example only and that many variations are possible without departing from the scope of the invention. For example, although in the embodiments described the dynamic members pivot automatically under the action of the wind, they could be positively driven.

## Claims

1. A wind operable generator comprising a turbine, deflector means for directing wind onto the turbine, and a dynamo drivably connected to the turbine and operative to generate electricity under the action of the turbine.

2. A wind operable generator as claimed in claim 1, in which the deflector means comprise one or more static deflectors.

3. A wind operable generator as claimed in claim 1 or 2, in which the deflector means comprise one or more dynamic deflectors.

4. A wind operable generator as claimed in claim 2 or 3, in which the or each deflector is shaped to direct incident wind onto a desired part of a blade of the turbine.

5. A wind operable generator as claimed in claim 3 or claim 4, when appendant to claim 3, in which the or each dynamic deflector is pivotally mounted allowing the deflector to alter its position automatically in response to changes in wind direction.

6. A wind operable generator as claimed in claim 5, in which means are provided for driving the or each dynamic deflector around its pivotal mounting.

7. A wind operable generator as claimed in any preceding claim in which the or each blade of the turbine comprises a convex portion and a concave portion disposed on opposite sides respectively of an upright shaft.

8. A wind operable generator as claimed in claim 7, in which the upright shaft is vertical.

9. A wind operable generator as claimed in claim 7 or 8, in which the shaft is mounted in a roller bearing at its upper end and a ceramic bush at its lower end.

10. A wind operable generator as claimed in claim 7, 8 or 9, in which the dynamo comprises a rotor connected to the shaft and a stator surrounding the rotor.

11. A wind operable generator as claimed in any preceding claim, in which the deflector means and blades of the turbine are made from synthetic plastics material.

12. An installation comprising a series of wind operable generators as claimed in any preceding claim.
